# EUROPÄISCHE PATENTANMELDUNG

(11) **EP 3 913 114 A1**
(43) Veröffentlichungstag der Anmeldung: **24.11.2021**
(21) Anmeldenummer: 20175734.1
(22) Anmeldetag: 20.05.2020
(51) Int. Cl.: C25B 1/10, C25B 9/08, C25B 11/03, H01M 4/88

(54) **ELEKTROCHEMISCHES SYSTEM ZUR WASSERSPALTUNG**

(71) Anmelder: Siemens Aktiengesellschaft, 80333 München (DE)
(72) Erfinder: Jensen, Jens Dahl, 14050 Berlin (DE); Winkler, Gabriele, 13587 Berlin (DE)

(57) **Zusammenfassung**

Beschrieben wird ein elektrochemisches System umfassend ein Katalysatorbauteil (10), wobei das Katalysatorbauteil (10) bzw. das elektrochemische System geeignet sind, Wasser elektrochemisch zu spalten und Wasserstoff sowie Sauerstoff zu entwickeln, wobei das Katalysatorbauteil eine Trägerstruktur (1) und ein Katalysatormaterial (2) umfasst, welches Katalysatormaterial (2) in einer dünnen Schicht auf der Trägerstruktur (1) aufgebracht ist.

## Beschreibung

Die vorliegende Erfindung betrifft einen Katalysator sowie ein elektrochemisches System umfassend ein derartiges Katalysatorbauteil, wobei das eingesetzte Katalysatormaterial bzw. das elektrochemische System geeignet sind, Wasser elektrochemisch zu spalten und Wasserstoff sowie Sauerstoff zu entwickeln.

### Stand der Technik

Aktuell stellt die Produktion von Wasserstoffgas eine attraktive Speicherlösung für Energie aus erneuerbaren Quellen wie Wind, Wasser und Sonne dar. Dafür wird in einem elektrochemischen System, einer sogenannten Power-to-Gas-Anlage, eine Wasserstoffentwicklungsreaktion an einer Kathode sowie eine Sauerstoffentwicklungsreaktion an einer Anode betrieben. So wird also aus Wind-, Sonnen- oder Wasserkraft gewonnener Strom, auch Ökostrom genannt, durch elektrochemische Zersetzung des Wassers (Elektrolyse) in Wasserstoff umgewandelt. Wasserstoff ist ein Energieträger, der im Gegensatz zu fossilen Brennstoffen bei der Verbrennung keine schädlichen Emissionen verursacht. Außerdem lässt sich der Wasserstoff in die bestehende Erdgas- Infrastruktur auf einfache Weise einspeisen.

In einer Power-to-Gas-Anlage erfolgt die Wasserstoff-Erzeugung unter anderem über eine trockene Polymer-Elektrolyt-Membran-Elektrolyse (PEM-Elektrolyse). Die PEM-Elektrolyse besteht aus einer Wasserstoffentwicklungsreaktion (Hydrogen Evolution Reaction, HER) an der Kathode und einer Sauerstoffentwicklungsreaktion (Oxygen Evolution Reaction, OER) an der Anode. Dabei handelt es sich um kinetisch sehr träge Reaktionen, die wirksame Elektrokatalysatoren erfordern, um den Energiebedarf für die Spaltung zu reduzieren bzw. die Spaltungsrate zu steigern.

Die aktuell eingesetzten wirksamsten Elektrokatalysatoren sind die Metalle und Oxide aus der Platingruppe. Unter der Platingruppe, auch Nickelgruppe genannt, werden die Elemente Nickel (Ni), Palladium (Pd) und Platin (Pt) zusammengefasst. Diese Elemente der Platingruppe sind in der Erdkruste sehr selten vorhanden und dementsprechend teuer für eine zunehmende Skalierbarkeit in den neuen Prozessen der Energieumwandlung. Bisher wird beispielsweise versucht durch Synthese neuer Produkte, die katalytische Reaktivität von Platingruppenelementen zu verbessern und dadurch ihre eingesetzte Menge zu minimieren. Zurzeit werden entweder kommerziell erhältliche Iridium-Katalysatoren bevorzugt in Form von Katalysatorpartikeln. Diese werden bevorzugt aus einer Tinte verarbeitet und auf die Polymer-Membran aufgetragen. Oder es kommt für die elektrochemische Wasserspaltung ein elektrochemisches System zum Einsatz, welches als Elektroden je eine Gasdiffusionselektrode aufweist, auf, in oder an welchen Gasdiffusionselektroden oben beschriebene Elektrokatalysatoren angebracht sind.

Die Speicherung von Energie aus erneuerbaren Quellen wie Wind, Wasser und Sonne soll für eine ökonomisch sinnvolle Versorgung und Verteilung speicherbar gemacht werden. Dazu muss die Ressourcenendlichkeit der Elektrokatalysatoren berücksichtigt werden.

Folglich stellt es sich als technisch erforderlich dar, eine verbesserte Lösung vorzuschlagen, welche die aus dem Stand der Technik bekannten Nachteile vermeidet. Insbesondere soll die vorzuschlagende Lösung bei gleicher oder verbesserter Umsetzungsrate eine Reduktion der notwendigen Katalysatormenge ermöglichen.

Diese der vorliegenden Erfindung zugrunde liegende Aufgabe wird durch ein Katalysatorbauteil gemäß dem Patentanspruch 1 gelöst sowie durch ein elektrochemisches System gemäß dem Patentanspruch 11. Vorteilhafte Ausgestaltungen der Erfindung sind Gegenstand der Unteransprüche.

### Beschreibung der Erfindung

Das erfindungsgemäße Katalysatorbauteil wird in einem elektrochemischen System bevorzugt eingesetzt, wobei das Katalysatorbauteil eine Trägerstruktur und ein Katalysatormaterial umfasst, welches Katalysatormaterial in einer dünnen Schicht auf der Trägerstruktur aufgebracht ist. Besonders bevorzugt wird das Katalysatorbauteil in einem PEM-System (PEM Proton Exchange Membrane) eingesetzt. Ein derartiges System kann zur Wasserspaltung, aber auch alternativ für sogenannte Fuel Cells oder vergleichbare Systeme Anwendung finden.

Unter einer Trägerstruktur ist im Zusammenhang mit der Patentanmeldung ein Gewebe oder Gelege oder anders strukturierter oder perforierter, z. B. faserartiger Träger zu verstehen, welcher beispielsweise permeabel oder semipermeabel ausgestaltet ist.

Unter Katalysatormaterial ist ein Material, ein Element oder eine Verbindung zu verstehen, welche eine elektrochemische bzw. chemische Reaktion, in ihrer Kinetik ermöglicht, beschleunigt oder so begünstigt, dass der Energiebedarf für diese Reaktion reduziert werden kann. Im vorliegenden Beispiel der Wasserspaltung wird durch einen geeigneten Katalysator die Spaltungsrate gesteigert.

Die Vorteile des erfindungsgemäßen Katalysatorbauteils liegen zum einen in der Trägerstruktur, durch deren Geometrie die reaktive Oberfläche, die also das Katalysatormaterial trägt, erhöht wird, wodurch auch gleichzeitig ein geringerer Materialverbrauch des Katalysatormaterials gewährleistet wird. Zum anderen wird durch die Aufbringung einer nur dünnen Katalysatorschicht ein minimierter Materialeinsatz gewährleistet.

Zweckdienlicherweise beträgt die Schichtdicke der dünnen Schicht des Katalysatormaterials des Katalysatorbauteils zwischen einigen Atomlagen und mehreren Nanometern.

Bevorzugt werden als Katalysatormaterial Metalle oder Metalloxide aus der Gruppe der Übergangsmetalle verwendet, insbesondere aus der Platin- oder Kobaltgruppe. Insbesondere kann als Katalysatormaterial Platin, Iridium oder Iridiumdioxid eingesetzt werden.

Bei der Herstellung des Katalysatorbauteils wird die dünne Schicht des Katalysatormaterials bevorzugt mittels eines Verfahrens gewonnen, welches wenigstens einen Precursor einsetzt. Besonders bevorzugt wird zur Abschaltung der Katalysatorschicht ein ALD-Verfahren verwendet (ALD Atomic Layer Deposition).

Ein derartiges Verfahren birgt für das Katalysatorbauteil die Vorteile, dass besonders glatte Oberflächen erzeugt werden können, an welchen keine Anhaftung von Gasblasen beispielsweise von Gasblasen im Elektrolyten erfolgt, oder nur eine sehr seltene geringe Anhaftung von Gasblasen. Eine Vermeidung von Gasblasen an der Katalysatoroberfläche bewirkt, dass dieser stets vollumfänglich seine katalytische Wirkung entfalten kann. Ein weiterer Vorteil besteht darin, dass je glatter die Oberfläche des Katalysatorbauteils ist, desto weniger Korrosionsangriffsstellen bietet das Bauteil dem Elektrolyten. Bei dem vorgeschlagenen Katalysatorbauteil wird die elektrochemische Stabilität demnach enorm erhöht.

Insbesondere weist das Katalysatorbauteil in einer Ausführungsform noch ein weiteres Metalloxid auf, insbesondere antimondotiertes Zinnoxid (ATO), Titandioxid, Nickeloxid oder Kobaltoxid, wobei dieses weitere Metalloxid in einer weiteren dünnen Schicht zwischen der Oberfläche der Trägerstruktur und der dünnen Schicht des Katalysatormaterials vorliegt. Diese zusätzliche dielektrische Schicht auf der Trägerstruktur birgt den Vorteil, das Katalysatorbauteil elektrisch kontaktierbar zu machen.

In einer besonderen Ausgestaltung der Erfindung wird eine Gasdiffusionselektrode bereitgestellt, welche aus einem erfindungsgemäßen Katalysatorbauteil besteht, umfassend eine elektrisch leitfähige erste dünne Schicht auf der Trägerstruktur und umfassend eine zweite dünne Schicht des Katalysatormaterials. Bei der Ausgestaltung als Gasdiffusionselektrode ist es für die Funktion wichtig, dass die Trägerstruktur semipermeabel ausgestaltet ist.

In einer besonders geeigneten Ausführungsform des Katalysatorbauteils ist auch dessen dünne Metalloxidschicht mittels einem ALD-Verfahren aufgebracht. Eine derartige dielektrische Schicht birgt außerdem den Vorteil, den Innenwiderstand des Bauteils zu senken.

Insbesondere ist das Katalysatorbauteil, auch wenn es als Gasdiffusionselektrode ausgestaltet ist, als ein austauschbares Kassettenbauteil konstruiert. Eine derartige Ausführungsform birgt den Vorteil, dass das Katalysatorbauteil, welches häufig sehr viel früher als andere Komponenten des elektrochemischen Systems verbraucht bzw. abgenutzt oder angegriffen ist, früher austauschen zu können als den Rest der Elektrolysezelle. Dabei ist die Gasdiffusionselektrode im Wesentlichen gleich dem Katalysatorbauteil aufgebaut und zusätzlich elektrisch kontaktierbar ausgeführt. Je nachdem ob eine derartige Gasdiffusionselektrode als Katode oder Anode Anwendung findet, muss das Katalysatormaterial gewählt sein.

In einer Ausführungsform der Erfindung wird ein elektrochemisches System bereitgestellt, welches insbesondere zur elektrochemischen Wasserspaltung dient: Es umfasst eine Katode, an welcher die Wasserstoffentwicklungsreaktion erfolgt und eine Anode, an welcher die Sauerstoffentwicklungsreaktion erfolgt sowie wenigstens ein Katalysatorbauteil gemäß einer Ausführungsform der Erfindung. Insbesondere trennt die Gasdiffusionselektrode dabei Flüssigphase und entstehende Gasphase und das umfasste Katalysatormaterial steigert die Kinetik der zu betreibenden elektrochemischen Umsetzung.

Das elektrochemische System umfasst dabei insbesondere auch eine Protonen-Austausch-Membran (PEM), welche Anoden- und Kathodenraum trennt. In dem elektrochemischen System kann ein Katalysatorbauteil, wie obenstehend beschrieben, auch direkt als Anode oder Kathode fungieren, wobei das geeignete Katalysatormaterial auf die jeweilige Elektrodenreaktion abgestimmt sein muss.

Die vorstehend beschriebene Erfindung hat u. a. den Vorteil, die benötigte Katalysatormenge für eine effektive Elektrolyse, insbesondere eine Wasserspaltung reduzieren zu können. Dies wird durch Erhöhung der massenspezifischen Oberfläche, durch die Geometrie der Trägerstruktur erzielt. Von besonderem Vorteil ist der Einsatz eines Gewebes oder Geleges als Trägerstruktur, bestehend aus Mullit-Fasern. Mullit-Fasern sind keramische Fasern, die aus Siliziumdioxid oder Aluminiumdioxid bestehen. Diese Mullit-Fasern werden im Hochtemperaturbereich als Isolationsmaterial eingesetzt und sind gegen Korrosion, Säuren und Basen beständig. Alternativ können auch Gewebe oder Gelege aus Korund-Fasern (Al₂O₃) oder Siliziumcarbid verwendet werden. Diese Keramikfasern besitzen außerdem auch eine hohe mechanische Festigkeit.

Die katalytische Oberfläche des Katalysatorbauteils wird insbesondere durch Abscheidung einer dünnen Schicht eines Katalysatormaterials auf der Trägerstruktur erreicht. Dieses Katalysatormaterial kann beispielsweise Iridiumoxid sein. Alternativ kommen als Katalysatormaterial Metalloxide aus der Platingruppe in Frage. Von diesen zeigen Iridiumdioxid und Rutheniumdioxid die geringste Überspannung beim Übergang von einer niedrigen in eine höhere Oxidationsstufe und damit die höchste Aktivität für eine Sauerstoffentwicklung. Die Adsorption der sauerstoffhaltigen Zwischenstufen reicht für einen zügigen Ladungsdurchtritt aus, gleichzeitig adsorbieren diese Zwischenstufen nicht so stark, dass der Sauerstoff nach weiteren Reaktionen freigesetzt wird. Rutheniumdioxid korrodiert außerdem während der Sauerstoffentwicklung im sauren Milieu unter Bildung von Rutheniumoxid oder Rutheniumhydroxid (H₂RuO₂, RuO₄). Iridiumoxid hingegen ist im sauren Milieu sehr stabil und zeigt eine vergleichbar hohe Aktivität zur Sauerstoffentwicklung.

Besonders vorteilhafte Katalysatorbauteile umfassen außerdem eine leitfähige Oxidschicht, die noch vor der Katalysatorschicht auf der Trägerstruktur abgeschieden wird. Diese elektrisch leitfähige Schicht kann beispielsweise oxidischen Verbindungen wie Zinnoxid (SnO₂) und Antimonoxid (SbO₂) umfassen. Dieses leitfähige Oxid ist als antimondotiertes Zinnoxid (Antimon-Tin-Oxide ATO) bekannt. ATO hat noch den zusätzlichen Vorteil Katalysatoren wie Iridium, Iridiumoxid oder Platin in ihrer katalytischen Aktivität sowie in ihrer elektrochemischen Stabilität zu unterstützen.

Die Schichtdicken im atomaren und Nanometerbereich der dünnen Schichten von leitfähigem Oxid und Katalysatormaterial ermöglichen Tunneleffekte und Hoppingmechanismen für die Elektronenleitung. Die Elektronen können schneller von einem lokalisierten Zustand in einen benachbarten springen, da die Abstände zwischen den Schichten kurz sind. Um eben diese dünnen Schichten abzuscheiden, wird bevorzugt das ALD-Verfahren zur Atomlagenabscheidung genutzt, bei dem das Katalysatormaterial aus einem Precursor synthetisiert wird und somit eine Schicht ohne Verunreinigungen durch beispielsweise anorganische Anionen wie Chlorid, Tenside oder andere Reduktionsmittel erzeugt werden kann.

Durch den Verzicht auf Partikel werden entsprechend auch deren Nachteile wie Partikelanhäufungen und Agglomerate vermieden, da diese ein Nachteil eines Tinte- oder Rakelverfahrens, mittels dem Katalysatorpartikel in Form von Pulver abgeschieden werden, sind. Ein weiterer Nachteil, der bei Katalysatorpartikeln auftritt z. B. das Ablösen einzelner Partikel von einem Katalysatorbauteil, z. B. von der PEM, ist nicht möglich, da das Katalysatormaterial in einer zusammenhängenden Schicht abgeschieden wird.

Gerade auch beim Einsatz des Katalysatorbauteils als Elektrode wird noch ein weiterer Vorteil generiert: Es kann auf teure Elektrodenmaterialien, wie beispielsweise Titan verzichtet werden. Der Hauptbestandteil des Bauteils ist sehr kostengünstig und besteht überwiegend aus elektrisch leitfähigen Mullit-Fasern.

Auch beim Aufbau eines erfindungsgemäßen elektrochemischen Systems birgt das erfindungsgemäße Katalysatorbauteil insbesondere im Einsatz als Gasdiffusionselektrode den weiteren Vorteil, dass die Elektrodeneinheit sich dann nicht mehr an der Membranelektrodeneinheit (MEA), sondern an der Stromkollektorseite, die der Protonen-Austausch-Membran zugewandt ist, befindet. Der Katalysator ist als Schicht auf dem leitfähigen Mullit-Gewebe oder einer vergleichbaren Trägerstruktur als dünne zusammenhängende, insbesondere glatte Schicht mit einer Dicke im Nanobereich aufgetragen. Insbesondere kann bei dem vorgeschlagenen Herstellungsverfahren in einem Kalzinierungsschritt optimal die Stabilität und katalytischen Aktivität der Schicht eingestellt werden.

Ein weiterer Vorteil der Erfindung gegenüber dem Einsatz von sphärischen Katalysatorpartikeln ist, dass die geometrische Form der Trägerstruktur, z. B. eines Gewebes, ein besseres Verhältnis von Oberfläche zu Volumen bietet. Durch die Geometrie der Trägerstruktur wird die Oberfläche, also entsprechend die aktive Fläche des eingesetzten Katalysators, vergrößert und teure Katalysatormengen können eingespart werden.

Werden beispielsweise iridium- oder platinbasierte Aktivkomponenten aus der Gasphase über entsprechende Precursor auf eine Trägerstruktur abgeschieden, was eine deutliche Verbesserung gegenüber bisherigen Tinteverfahren zur Aufbringung von aktiven Komponent Partikeln darstellt, bei denen häufige Partikelagglomerate nicht vollständig vermieden werden konnten. Die so erzeugten Katalysatorbauteile können sowohl auf Anoden- als auch auf Kathodenseite einer PEM-Elektrolysezelle eingesetzt werden. Die Massenaktivität des Katalysatormaterials, z. B. Iridium oder Platin, wird gesteigert, da das eingesetzte Material optimaler verteilt ist. Besonders das ALD-Verfahren begünstigt aufgrund seiner physikalischen und chemischen Vorgehensweise sehr dünne homogene und konforme Beschichtungen mit gewünschter Stöchiometrie.

Neben der Materialeinsparung hat das ALD-Verfahren und allgemein die Bildung einer homogenen Katalysatorschicht im Vergleich zur Partikeltechnik den Vorteil, dass Wasserstoff- oder Sauerstoffblasen an glatten Flächen leicht abperlen können und nicht daran anhaften. Partikelagglomerate hingegen zeigen Ecken und hervorstehende Kanten, bilden also eine raue Partikeloberfläche, an welcher Wasserstoff- oder Sauerstoffblasen besonders gut haften bleiben. Bei herrschenden Spannungen von 2 bis 3 Volt beispielsweise werden an den Anhaftungsstellen die Katalysatoren erodiert. Das bedeutete bisher eine signifikante Einschränkung der Katalysatoraktivität.

Des Weiteren bietet ein ALD-Verfahren zur Ausbildung einer Katalysatorschicht den Vorteil, dass die elektrochemisch aktiven Materialien nahtlos aneinandergefügt werden, sodass kaum ein Innenwiderstand zwischen den Materialschichten herrscht und der Ladungstransport ohne Hindernisse erfolgt. Eine weitere Besonderheit des ALD-Verfahrens liegt darin, dass sich die Oberflächenreaktionen durch die Art der Prozessführung selbst begrenzen, sodass die aktiven Materialien in Schichtdicke und Zusammensetzung kalkulierbar und reproduzierbar abgeschieden werden.

Wird beispielsweise ein Mullit-Gewebe als Trägerstruktur für eine Gasdiffusionselektrode verwendet, ist dieses Mullit-Gewebematerial bei hohen Potenzialen z. B. auf der Anodenseite von ca. 1,8 Volt SHE bei einem Ampere pro Quadratzentimeter Stromdichte und einem pH-Wert des Elektrolyten von 2 gegen eine Korrosion sehr viel beständiger als es beispielsweise eine Titanelektrode wäre. Bei Titan äußert sich eine Korrosionsförderung in Form einer anwachsenden Passivierungsschicht aus Titandioxid, die den Kontaktwiderstand erhöht. Bei der Verwendung eines Mullit-Gewebeträgers für eine beschriebene Elektrode werden die ohmschen Widerstände nicht verändert.

Gleichermaßen wird die Katalysatorbeladung gesenkt, da nur sehr dünne glatte zusammenhängende Schichten insbesondere mit Dicken im Nanometerbereich auf dem leitfähigen Gewebe mit großer Oberfläche abgeschieden werden. Der Gewichtseinsatz der teuren Katalysatoren Iridium und Platin wird reduziert, aber auch die elektrokatalytische Effizienz und damit weitere Senkung von Betriebskosten und Investitionskosten wird verbessert. Durch die eingesetzte Trägerstruktur, insbesondere aus Mullit-Gewebe, kann des Weiteren das kostenintensive Titan eingespart werden.

Es wird also ein Katalysatorbauteil mit deutlich erhöhter elektrochemischer Stabilität bereitgestellt, welches keine bis sehr wenig Erosion zeigt, da es eine glatte Katalysatorschicht aufweist. Insbesondere ist nicht mit der Bildung einer schädlichen Passivierungsschicht wie im Beispiel von Titan und damit nicht mit einer Erhöhung der ohmschen Widerstände zu kämpfen. Die Lebensdauer der so erstellten Katalysatorbauteile und Stromkollektoren ist deutlich verlängert gegenüber bisherigen Bauteilen und Bauteilkomponenten. Insbesondere für die Skalierbarkeit, das bedeutet insbesondere das Upscaling elektrochemischer Prozesse, ist das vorgeschlagene Katalysatorbauteil und die vorgeschlagenen Gasdiffusionselektrode von besonderem Vorteil. Die deutliche Einsparung der kostenintensiven Materialien und die Skalierbarkeit des vorgeschlagenen Herstellungsverfahrens erlaubt die Erhöhung der Elektrolyseleistungen in den Mega- und Gigawattbereich. Die Abhängigkeit von limitierten Iridium-Ressourcen wird entschärft und ein industrieller Einsatz sowie eine Skalierung wird ermöglicht.

Beispiele und Ausführungsformen der vorliegenden Erfindung werden noch in exemplarischer Weise mit Bezug auf die Figuren 1 bis 7 der angehängten Zeichnung beschrieben:
- Figur 1: zeigt eine PEM-Elektrolysezelle mit Katalysator-Partikeln.
- Figur 2: zeigt eine PEM-Elektrolysezelle mit einem Katalysatorbauteil 10.
- Figur 3: zeigt eine PEM-Elektrolysezelle mit einer Katalysator-GDE.
- Figur 4: zeigt beidseitig der PEM eingesetzte Katalysator-GDEs.
- Figur 5: zeigt Beispiele für geeignete Iridium-Precursor 51 - 55 und
- Figur 6: zeigt Beispiele für Platin-Precursor 61 - 62.
- Figur 7: zeigt die Schichtabfolge auf einem Katalysatorbauteil 10.

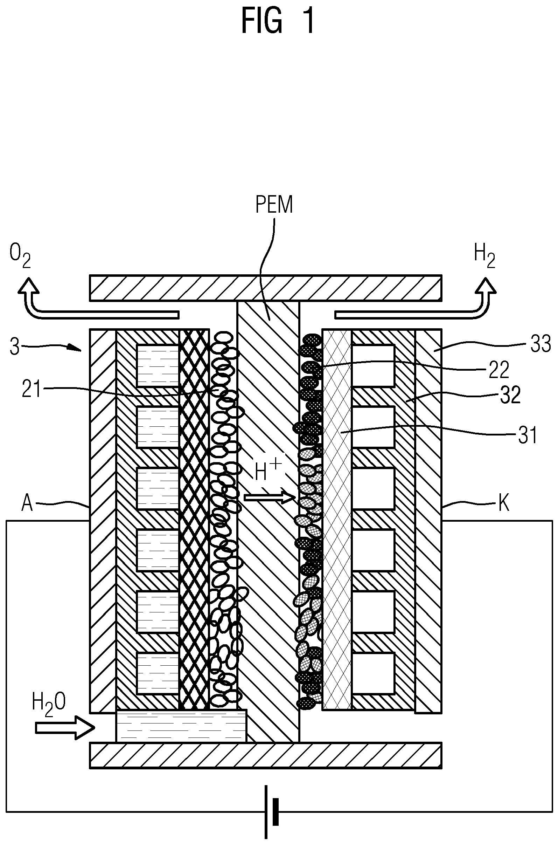

Figur 1 zeigt zunächst den schematischen Aufbau einer Polymer-Elektrolyt-Membran-Elektrolysezelle, bei der sich der Katalysator direkt auf der Protonen-Austausch-Membran (PEM) befindet. Dabei werden die Katalysatorpartikel 22, z.B. Iridium-Oxid-Partikel in einem Nafion-Ionomer eingebettet, damit eine Bindung zwischen Katalysator-Partikel 22 und der PEM-Membran entsteht.

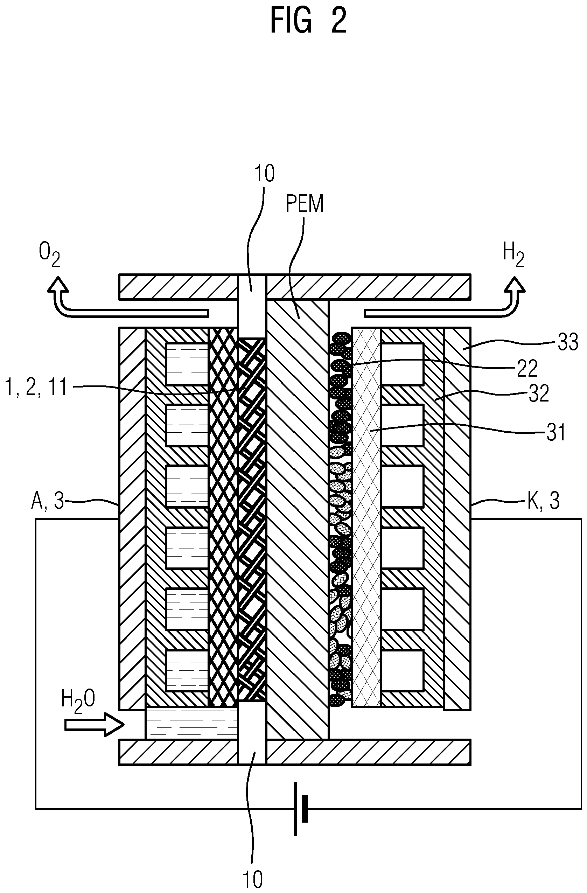

Figur 1 im Vergleich mit Figur 2 stellt den grundlegenden Unterschied zwischen dem Einsatz von Katalysatorpartikeln 22 und einem Katalysatorbauteil 10 mit Katalysatorschicht 1 dar. Die beschichtete Trägerstruktur 2, z.B. ein Keramikgewebe, wird in einem Polymer-Elektrolyse-Stack zwischen der protonendurchlässigen Polymermembran PEM und dem Stromkollektor A befestigt, wobei sich das Gewebe 2 eng an der Polymermembran PEM befindet und innerhalb des Stacks über z.B. einen Kassettenverschluss leicht austauschbar ist.

In einem Ausführungsbeispiel wird Mullit-Gewebe als Trägermaterial 1 gewählt. Durch rein chemische oder physikalisch-chemische Syntheseverfahren (z.B. Atomlagenabscheidung ALD) können auf dem Mullit-Gewebe 1 katalytisch wirkende Oberflächen 2 erzeugt werden. Zur Steigerung der elektrischen Leitfähigkeit wird vor Bildung der Katalysatorschicht eine Schicht eines elektrisch leitfähigen Oxids wie beispielsweise ATO (antimondotiertes Zinnoxid) nasschemisch abgeschieden.

Figur 2 zeigt eine Ausgestaltungsform einer erfindungsgemäß abgeänderten Variante einer PEM-Elektrolysezelle. Anstelle der Katalysatorpartikel 22, die in einem Nafion-Ionomer gebunden sind, wird der Katalysator als glatte Schicht 1 auf ein vorher leitfähig erzeugtes Keramikgewebe 2 abgeschieden und dann das Gewebe zwischen Stromkollektor A und PEM-Membran platziert.

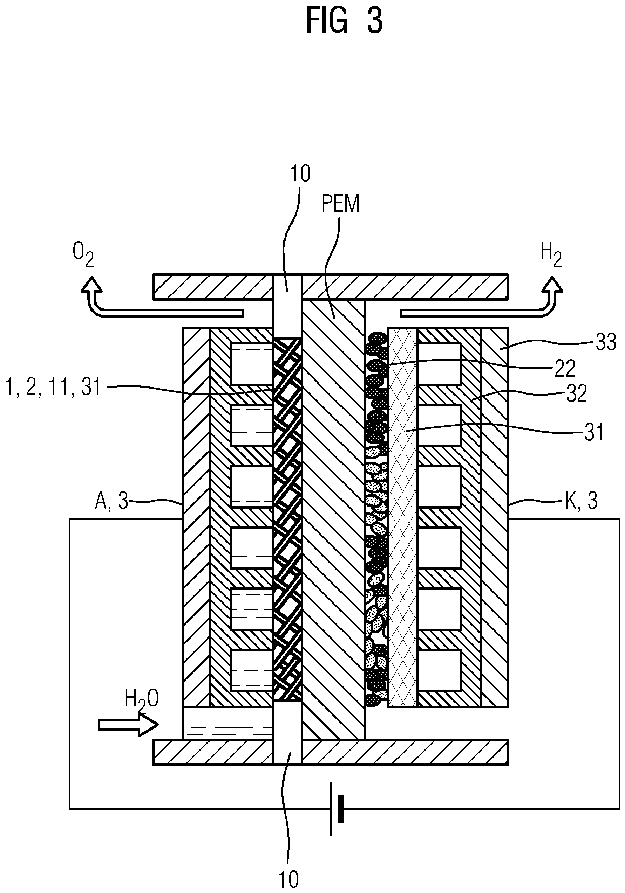

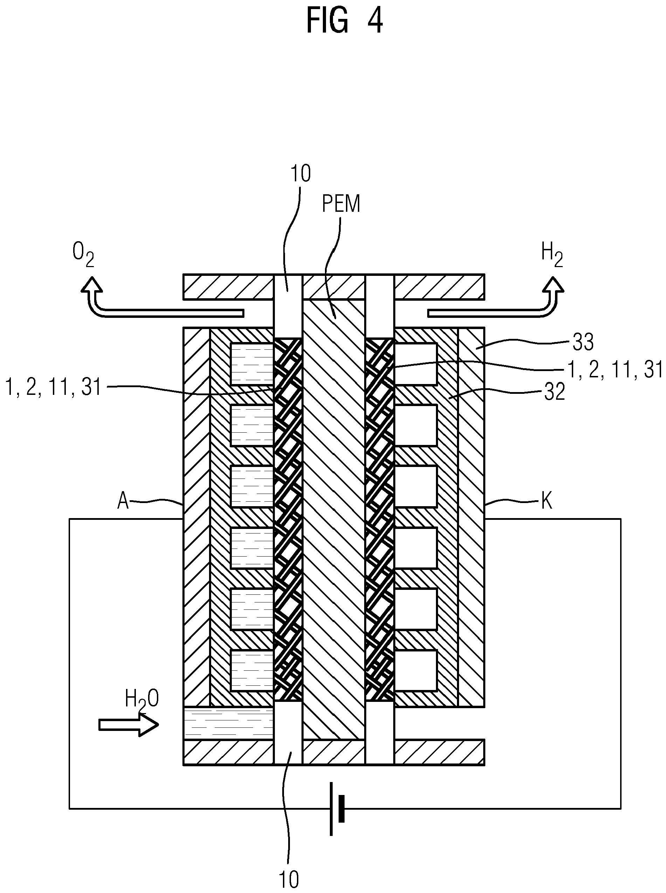

Die Figuren 3 und 4 zeigen weitere mögliche Varianten von Elektrolysezellen, in denen anstelle von gebundenen Partikelanhäufungen ein katalysatorbeschichtetes Keramikgewebe 2 eingesetzt wird. In Figur 3 wird z.B. auf den Stromkollektor mit Gas-Diffusions-Layer verzichtet und dafür ein katalysatorbeschichtetes Gewebe als GDE eingesetzt. Das Gewebe 2 hat genügend große Öffnungen, wie ein Metallgitter, so dass die Gasblasen entweichen können. Das gewählte Keramikgewebe 2 ist beispielsweise ein Mullit-Gewebe, welches mit einer Antimon-Zinnoxid-Schicht (ATO) 11 elektrisch leitfähig beschichtet wurde. Ein derartiges Bauteil kann wie ein Titangitter als Elektrode A, K fungieren. So kann beispielsweise auch auf der Kathodenseite der Stromkollektor K, der vorher häufig aus eisenhaltigen Legierungen oder carbonfaserhaltigen Materialien gebildet wurde, gegen eine leitfähige Keramikfaser 2/11 ersetzt werden, vergleiche Figur 4.

In dieser Ausführungsform würde das kathodenseitig eingesetzte HER-Katalysatormaterial beispielsweise Platin oder Nickel-Cobalt umfassen.

Auch dieses Katalysatormaterial kann über Atomlagenabscheidung als Schicht abgeschieden werden. Entsprechend entfiele auch für die Kathodenherstellung die Verwendung einer Katalysator-Tinte.

Figur 3 zeigt eine weitere beispielhafte Ausführungsform der Erfindung, wobei Mullit-Gewebe 1 gleichzeitig Träger des Katalysators 2 und Gas-Diffusions-Schicht ist.

Figur 4 zeigt eine weitere beispielhafte Ausführungsform der Erfindung, in der Mullit-Gewebe 1 sowohl auf der Kathodenals auch auf der Anodenseite als Träger 1 der Katalysatoren 2 und als Gas-Diffusions-Schicht fungiert. Das Mullit-Gewebe 1 grenzt sowohl an die Membran PEM, welche insbesondere eine Nafion-Membran ist, als auch an die Bipolarplatte 32. Auf der an die Nafion-Membran PEM angrenzenden Seite ist das Mullit- Gewebe 1 Träger des Katalysators 2 und auf der anderen Seite überträgt das Gewebe 1 als Stromkollektor Elektronen e⁻ an die Bipolarplatte 32.

Für die Herstellung eines leitfähigen Keramikgewebes 1,11 wird zunächst eine elektrisch leitfähige Schicht 11 auf einem Keramikgewebe 1, z. B. auf Mullit-Gewebe abgeschieden. Die Abscheidung erfolgt bevorzugt auf nasschemischem Weg, da das Mullit-Gewebe 1 von beiden Seiten (Ober- und Unterseite) sowie bevorzugt bis in die Zwischenräume beschichtet werden muss. Um dem Mullit-Gewebe 1 eine elektrische Leitfähigkeit zu verleihen, wird das Gewebe 1 bevorzugt mit einer leitfähigen Oxidlage beschichtet. Die leitfähige Schicht umfasst insbesondere Metalle wie Antimon oder Zinn.

Für die Schichtbildung werden Precursor wie beispielsweise Chlorid-Salze der Metalle Antimon und Zinn verwendet, da diese wasserlöslich sind. Bevorzugt wird über eine nasschemische Hydrolyse aus dem trivalenten Antimonchlorid und dem tetravalenten Zinnchlorid bei einem pH-Wert von 2 mittels Natriumhydroxid eine leitfähige oxidische Schicht auf dem Mullit- Gewebe abgeschieden. Dazu wird eine Lösung aus Antimon(III)-Chlorid und Zinn(IV)-Chlorid hergestellt, die auf ca. 90°C erwärmt wird.

Das Gewebe 1 wird in die erwärmte Lösung getaucht und es wird tropfenweise eine 10%ige Natriumhydroxid-Lösung zugeführt, um über einen Zeitraum von circa 2 Stunden einen pH-Wert von 2 aufrecht zu erhalten. In diesem Milieu kann eine Hydrolyse der genannten Metallchloride stattfinden. Dabei werden die Metallchloride in Metallhydroxide und Natriumchlorid gespalten. Die Metallhydroxide sind aber nicht wasserlöslich und bilden auf dem Mullit-Gewebe ein Präzipitat. Während der Hydrolyse-Beschichtung des Mullit-Gewebes 1 wird die Lösung mit Hilfe vom Ultraschalleinwirkung oder durch mechanisches Rühren durchmischt.

Nach Ausfällung der Metallhydroxide wird die Lösung noch circa 2 weitere Stunden bei 90°C durchmischt. Anschließend lässt man die Lösung auf Raumtemperatur abkühlen, saugt die überstehende Flüssigkeit vom Gewebe 1 ab und wäscht das beschichtete Gewebe, so dass keine Chloridrückstände daran haften. Das chloridfreie beschichtete Gewebe 1 wird bei 120°C getrocknet und bei 750°C unter Luftsauerstoff kalziniert. Beim Trocknen und Kalzinieren erfolgt die Bildung der Oxidschicht 11. Der gesamte Ablauf der Hydrolysebeschichtung ist in den chemischen Gleichungen i bis iv dargestellt:
i) SbCl₃ + NaOH → Sb(OH)₃ + 3 NaCl
ii) SnCl₄ + NaOH → Sn(OH)₄ + 4 NaCl
iii) 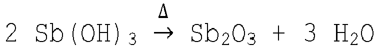
iv)

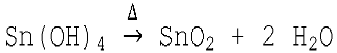

Die dafür erforderliche Metallchloridionenkonzentration in der Lösung berechnet sich aus der erforderlichen Dicke der abzuscheidenden Schicht, nach der spezifischen Oberfläche der Mullit-Faser 1 und nach der Masse der Mullit-Faser 1. Der elektrische Leitwert ergibt sich hauptsächlich aus dem Molverhältnis von Antimonoxid zu Zinnoxid.

### Beispielhaft sei nun noch die Abscheidung des Katalysatormaterials beschrieben:

Die OER-Katalysatoren für die Sauerstoffentwicklungsreaktion (OER), z.B. Iridiumoxid, und die HER-Katalysatoren für die Wasserstoffentwicklungsreaktion (HER), z. B. Platin, lassen sich sowohl über ein physikalisch-chemisches Verfahren als auch rein chemisch abscheiden. In sehr geringen Mengen lassen sich die äußerst teuren und seltenen Edelmetalle der PlatinGruppe aus der Gasphase abscheiden. Dieses Verfahren wird Atomlagenabscheidung genannt.

### Physikalisch-chemische Abscheidung von Iridiumoxid als OER-Katalysator:

Nach der Abscheidung des leitfähigen Oxids 11 wird als OER-Katalysatormaterial bevorzugt ein Metalloxid aus der Platin- Gruppe gewählt. Von den Metalloxiden aus der PlatinGruppe zeigen IrO₂ und RuO₂ die geringste Überspannung beim Übergang von einer niedrigen in eine höhere Oxidationsstufe und damit die höchste Aktivität für eine Sauerstoffentwicklung an der Anode: Einerseits reicht die Adsorption der sauerstoffhaltigen Zwischenstufen für einen zügigen Ladungsdurchtritt aus und andererseits adsorbieren diese Zwischenstufen nicht so stark, so dass der Sauerstoff nach weiteren Reaktionen freigesetzt wird. RuO₂ jedoch korrodiert während der Sauerstoffentwicklung in saurem Milieu unter Bildung von RuO₄ oder H₂RuO₂. Iridiumoxid hingegen ist im sauren Milieu wesentlich stabiler und zeigt trotzdem noch eine ausreichende Aktivität zur Sauerstoffentwicklung.

Die Mullitfaser 1 wird also zuerst mit Sb/Sn-Oxid 11 für eine elektrische Leitfähigkeit und anschließend mit dem katalytisch wirkenden Iridiumoxid 2 beschichtet. Im Nachgang wird das beschichtete Keramikgewebe 1 noch bei 400°C bis 500°C zur Erhöhung der katalytischen Aktivität und Verringerung der Löslichkeit des Katalysators 2 getempert. Dadurch wird das Katalysatorbauteil auch für den Einsatz in Elektrolyten mit vorherrschenden niedrigen pH-Werten unter 7 und Stromdichten von bis zu 30 mA/cm⁻² geeignet. Der Temperschritt ist nötig, da ungetempertes Iridiumoxid nach den im ALD-Prozess herrschenden Abscheidungstemperaturen zwischen 185°C und 300°C amorph oder in einer Mischform aus amorph und kristallin auftreten kann. In diesen Modifikationen ist Iridiumoxid 100-fach löslicher als in der kristallinen Form und zeigt keine katalytische Aktivität. Bei Temperaturen von 400°C bis 500°C
lassen sich sowohl die Keramikgewebe 1 als auch das leitfähige Oxid 11 und der Katalysator 2 unter Luftsauerstoff kalzinieren.

Bei der Atomlagenabscheidung wird das leitfähige Mullit- Gewebe 1 aus der Gasphase über Iridium-Precursor und Ozon O₃ als zweiten Reaktanten mit Iridiumoxid beschichtet.

Als Iridium-Precursor können gewählt werden:
Tris(norbornadiene)(acetylacetonato)iridium (III),
Iridium(III)acetylacetonat (Ir(acac)3 51,
1,5-Cyclo-octadiene(acetylacetonato)iridium(I) 52,
1,5-Cyclooctadiene(hexafluoroacetylacetonato)iridium(I) 53,
1-Ethylcyclopentadienyl-1,3-cyclohexadiene- iridium(I) 54, (Methylcyclopentadienyl)(1,5-cyclooctadiene)iridium(I) 55.

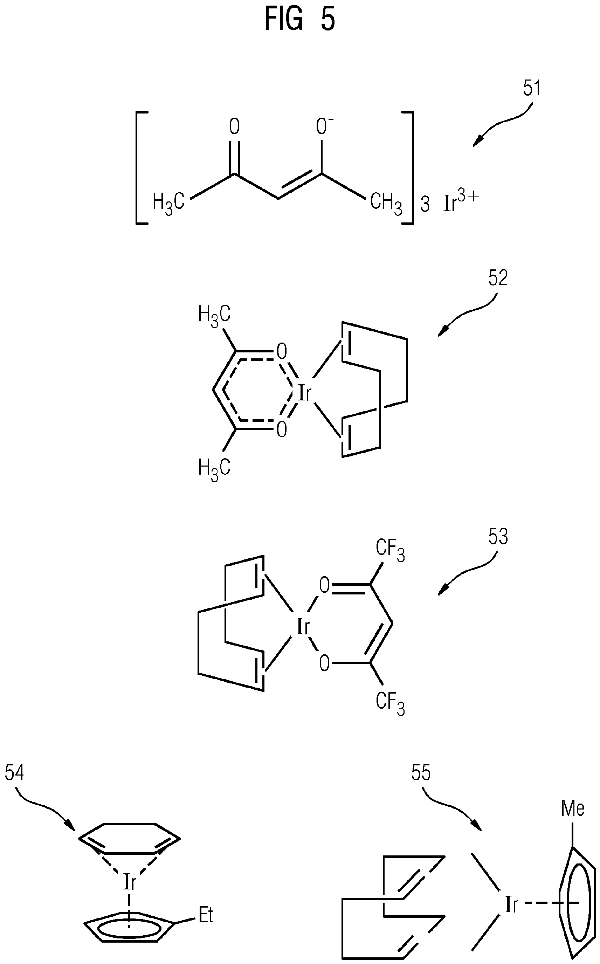

Die entsprechenden Strukturformeln sind in der Figur 5 gezeigt.

Der Precursor Ir(acac)3 wird bevorzugt in einem Gefäß, einem sogenannten Bubbler, als Schutz gegen Luftsauerstoff und Luftfeuchtigkeit aufbewahrt. In diesem kann er vor dem Abscheidungsprozess mittels eines Thermostaten auf 170°C erhitzt werden. Der Bubbler ist mit einem Zuleitungsrohr und einem Entnahmerohr ausgestattet. Über das Zuleitungsrohr gelangt Trägergas, z.B. Stickstoff N₂, in den Bubbler und vermischt sich dort mit dem Ir(acac)₃-Dampf. Das Stickstoff-Precursor-Dampfgemisch verlässt über das Entnahmerohr den Bubbler und wird über Rohre pneumatisch mit Hilfe von Ventilen in den Reaktor geleitet, in dem die Abscheidung stattfindet.

Im Reaktor ist das leitfähige Gewebe 1 positioniert, das vor dem Abscheidungsprozess auf 185°C erwärmt wurde. Auf die ATO-Oberfläche des Gewebes wird dann eine Monolage Ir(acac)₃ chemisorbiert. Der Ir(acac)₃-Strom im Reaktor wird durch den Dampfdruck des Precursor und durch den geregelten Durchfluss des N₂-Trägergases kontrolliert und gesteuert.

In einem Folgeschritt werden überschüssige Ir(acac)₃-Gasmoleküle durch Abpumpen des Reaktors entfernt und zusätzlich wird der Reaktor mit Stickstoff N₂ gespült. Anschließend wird Ozon O₃ als zweiter Reaktant in den Reaktor eingeleitet. Das Ozon reagiert mit dem Ir(acac)₃-Komplex unter Bildung von Iridiumoxid und den volatilen CO₂- und H₂O-Molekülen. Danach werden die volatilen CO₂- und H₂O-Moleküle durch Abpumpen des Reaktors entfernt. Der Reaktorraum und das beschichtete Gewebe 1 werden außerdem mit Stickstoff gespült.

Die beschriebenen Abscheidungsprozesse mit den jeweiligen Spül- und Evakuierungsschritten zwischen den schichtbildenden Prozessphasen umfassen einen Abscheidezyklus, der mehrmals wiederholt wird. Jede einzelne schichtbildende Prozessphase umfasst einen vollständig ablaufenden Schichtbildungsprozess. Das Ir(acac)₃ und das Ozon werden also sequenziell in den Reaktor geleitet und auf der ATO-Oberfläche 11 des Mullit-Gewebes 1 solange chemisorbiert, bis die gesamte ATO-Oberfläche 11 belegt ist. Danach finden keine weiteren Adsorptionsvorgänge statt. Die Einwirkdauer der einzelnen Schritte wird so gewählt, dass in einer adäquaten Zeit die gerade eingeleitete Komponente mit der ATO-Oberfläche 11 reagiert und der überschüssige Dampf, sowie die Nebenprodukte aus dem Reaktorraum entfernt werden. Die Adsorptionszeit von Ir(acac)₃, die Spaltungszeit in IrO₂, CO₂ sowie H₂O und die Spülzeiten zwischen den schichtbildenden Vorgängen liegen in der Größenordnung von Sekunden. Durch diese Art der Prozessführung begrenzen sich die Oberflächenreaktionen selbst, so dass eine reproduzierbare Iridiumoxid-Schicht mit kalkulierbarer Zusammensetzung abgeschieden wird. Das abgeschiedene Iridiumoxid wächst mit jedem nachfolgenden Zyklus.

Da unter 200°C amorphes Iridiumoxid entsteht und dieses weder eine gute Stabilität gegenüber sauren Elektrolyten bei einem Strom von bis zu 30 mAcm⁻² noch eine ausgezeichnete katalytische Wirkung zeigt, wird das beschichtete Mullit-Gewebe 1 anschließend noch bei 400°C bis 500°C unter Luftsauerstoff kalziniert. Da Iridiumoxid bei solch hohen Temperaturen kalziniert werden muss, werden als Trägermaterial 1 zweckdienlicherweise entsprechend temperaturbeständige Keramikfasern gewählt

### Physikalisch chemische Abscheidung von Platin als HER-Katalysator:

Auf der Kathodenseite wird für die Wasserstofferzeugung ein sogenannter HER-Katalysator eingesetzt. Ein HER-Katalysator ist zum Beispiel Platin. Platin lässt sich ebenfalls über Atomlagenabscheidung aus der Gasphase mit Hilfe eines Platin-Precursor bilden. Die Platinschicht kann beispielsweise auf der ATO-Oberfläche 11 des Mullit-Gewebes abgeschieden werden.

### Als Platin-Precursor können verwendet werden:

Platin (II) acetylacetonate (Pt(acac)₂) 61 oder Trimethylcyclopentadienylplatin (IV) 62.

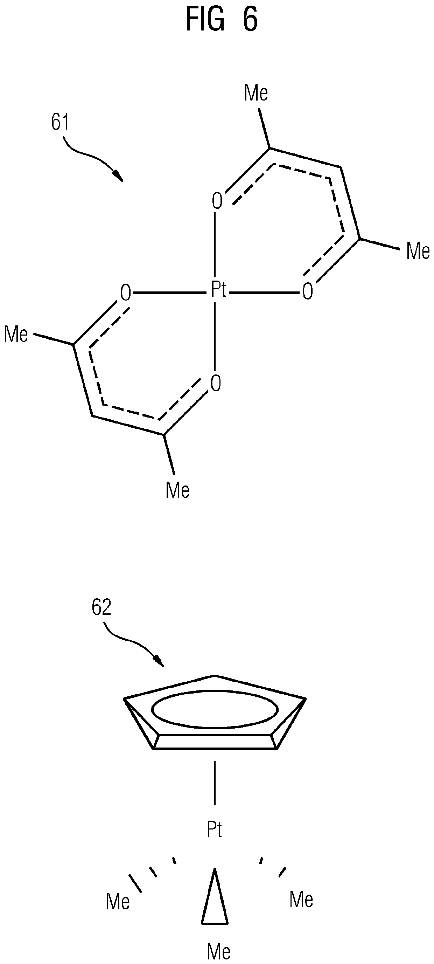

Die Figur 6 zeigt die entsprechenden Strukturformeln.

Die Vorgehensweise für die Abscheidung eines Platinfilms ist ähnlich zur Iridiumoxidabscheidung. Der Platin-Precursor Pt(acac)₂ wird auf 110°C erhitzt. Die Abscheidung im Reaktor erfolgt bei 140°C. Als zweiter Reaktant wird Ozon verwendet, um das Acetylacetonat abzuspalten. Das abgespaltene Acetylacetonat reagiert dann weiter zu volatilem CO₂ und H₂O. Als Abscheidungstemperatur wird 140°C gewählt, weil bei dieser Temperatur ein metallischer Film aus Platin, der eine gleichmäßige Schichtdicke aufweist, entsteht. Bei kleineren Temperaturen als 140°C wird aus Pt(acac)₂ und Ozon Platinoxid gebildet. Bei höheren Temperaturen als 140°C steigt die Abscheidungsrate, aber die Schichtdicke des Platin-Films auf dem Substrat wird ungleichmäßiger.

### Chemische Abscheidung von Iridium oder Platin:

Eine Alternative stellt die chemische Abscheidung von Iridium oder Platin auf eine Trägerstruktur 1 dar.

Für die chemische Abscheidung von Iridium auf Mullit-Gewebe 1 erfolgt beispielsweise eine Polyol-Synthese. Bei der Polyol-Synthese verwendet man Ethylenglykol sowohl als Reaktionsmedium als auch als Reduktionsmittel. Das getrocknete leitfähige Mullit-Gewebe 1, 11 wird mit Ethylenglykol durchtränkt. Dieser Schritt erfolgt bevorzugt unter Einwirkung von Ultraschall. Dazu kann das Reaktionsgefäß in ein Ultraschallbad gestellt werden. Der Iridium-Precursor, beispielsweise Dihydrogen-Hexachloroiridat(IV) H₂IrCl₆, wird in Ethylenglykol dispergiert und die Precursor-Lösung dem Reaktionsgefäß zugeführt. Bevor die Mischung im Reaktionsgefäß erhitzt wird, werden zu der Mischung einige Milliliter 0,1molare Natriumhydroxidlösung zugegeben, um den pH-Wert auf 11 einzustellen. Das Reaktionsgefäß wird durch eine geeignete Wärmequelle auf 160°C für ca. 24 Stunden erwärmt. Alternativ kann die Erwärmung auch mittels eines haushaltsüblichen Mikrowellengeräts erfolgen. Dazu wird bevorzugt eine Mikrowelle mit Ausgangsleistung der Mikrowelle von 900 W und einer Betriebsfrequenz 2450 Hz genutzt.

Zunächst wird die Mischung aus Mullit-Gewebe, Ethylenglykol, Dihydrogen-Hexachloroiridat (IV) und NaOH-Lösung in der Mikrowelle bei 100%-Leistung (900 W) 30 Sekunden erhitzt. Nach dem Erhitzen wird die Leistung der Mikrowelle auf 30%-Leistung, entsprechend 270 W reduziert und für circa zwei Minuten auf diesem Niveau gehalten, so dass das Reaktionsmedium die Siedetemperatur erreicht. In dieser Zeit wird das Iridium (IV) im Chlorokomplex durch das Ethylenglykol reduziert. Dabei reagieren die OH-Gruppen des Ethylenglykols mit den Ir(IV)Cl₆-Ionen zu metallischem Iridium. Das Ethylenglykol als Alkohol wird über die unstabilen Aldehyde zu Glykolsäure oder Oxalsäure oxidiert. Im alkalischen Medium kann die Reaktion bis zum Carbonat und schließlich bis zur CO₂-Bildung erfolgen. Das metallische Iridium schlägt sich als Präzipitat auf dem Mullit-Gewebe 1 nieder. Nach der Präzipitat-Bildung wird die Temperatur im Reaktionsgefäß über einige Stunden auf Raumtemperatur abgekühlt. Dann wir die Mullit-Faser 1 in sehr reinem Wasser, z.B. Mili-Q-Wasser gewaschen bis sie chloridfrei ist und anschließend getrocknet. Zur Bildung von Iridiumoxid kann das so beschichtete Mullit-Gewebe 1 in Luftsauerstoffatmosphäre bei 400°C bis 500°C mehrere Stunden kalziniert werden.

Platin kann ebenfalls auf diesem Wege analog über die Verwendung von Dihydrogen-Hexachloroplatinat (IV) als Precursor abgeschieden werden.

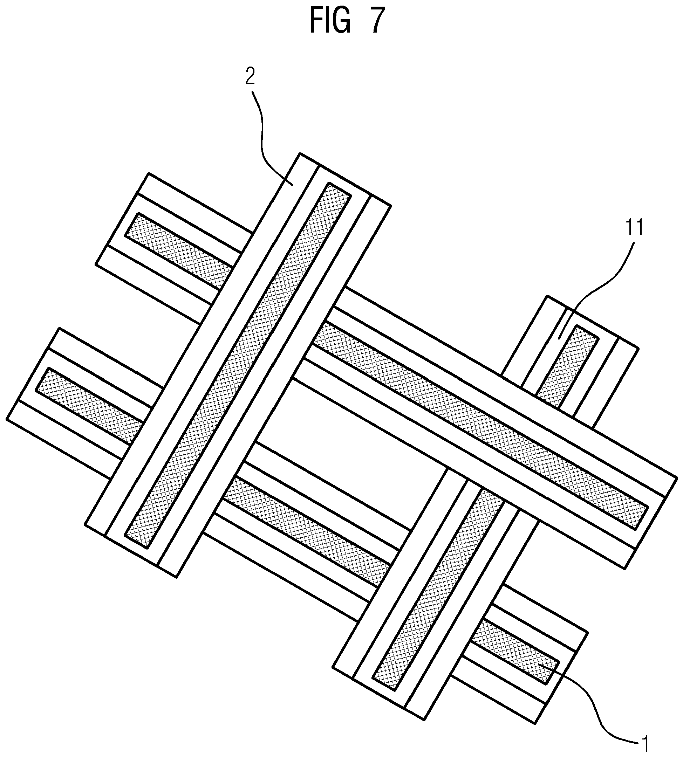

Figur 7 zeigt schematisch einen Ausschnitt eines Gewebes 1 als Trägermaterial mit der Schichtabfolge von iridiumbasierten Katalysator 2 auf ATO 11.

Mit der vorstehend beschriebenen Erfindung wird eine Reduzierung der Katalysatormenge durch Erhöhung der massenspezifischen Oberfläche erzielt. Eine Vergrößerung der katalytischen Oberfläche wird beispielsweise durch Abscheidung von Iridiumoxid 2 auf einem Gewebe 1 oder Gelege erreicht. Das Gewebe 1 oder Gelege besteht beispielsweise aus Mullit-Fasern. Mullit-Fasern sind keramische Fasern, die aus Siliziumdioxid und Aluminiumdioxid bestehen. Derartige Mullit-Fasern werden im Hochtemperaturbereich als Isolationsmaterial eingesetzt und sind gegen Korrosion, Säuren und Basen beständig. Alternativ können auch Gewebe oder Gelege aus Korund-Fasern (Al₂O₃) oder Siliziumcarbid verwendet werden. Solche Keramikfasern besitzen zudem auch eine hohe mechanische Festigkeit.

### Bezugszeichenliste:

- O₂: Sauerstoffgas
- H₂: Wasserstoffgas
- H₂O: Wasser

- 51 - 55: Iridium-Precursor
- 61 - 62: Platin-Precursor

- 1: Trägerstruktur, z.B. Mullitgewebe
- 11: leitfähige Schicht, z.B. leitfähiges Oxid, insbe-sondere Zinnoxid mit Antimonoxid
- 2: Katalysatormaterial, bzw. Katalysatorschicht, z.B. Iridiumoxid
- 21,22: Katalysatortragende Partikel
- 3: Gas-Diffusions-Elektrode
- 31: Gas-Diffusions-Schicht
- 32: Bipolarplatte
- 33: Endplatte

- 10: Katalysatorbauteil
- PEM: Protonenaustauschmembran (Proton-Exchange-Membrane)

- e⁻: Elektronen
- H⁺: Protonen

## Patentansprüche

1. Katalysatorbauteil (10) für ein elektrochemisches System, wobei das Katalysatorbauteil eine Trägerstruktur (1) und ein Katalysatormaterial (2) umfasst, welches Katalysatormaterial (2) in einer dünnen Schicht auf der Trägerstruktur (1) aufgebracht ist.

2. Katalysatorbauteil (10) nach Anspruch 1, wobei die dünne Schicht des Katalysatormaterials (2) eine Schichtdicke zwischen einigen Atomlagen und mehreren Nanometern aufweist.

3. Katalysatorbauteil (10) nach Anspruch 1 oder 2, wobei das Katalysatormaterial (2) ein Metall oder Metalloxid aus der Gruppe der Übergangsmetalle aufweist, insbesondere aus der Platin- oder Cobalt-Gruppe.

4. Katalysatorbauteil (10) nach einem der vorstehenden Ansprüche, wobei das Katalysatormaterial (2) insbesondere Platin, Iridium (Ir) oder Iridiumdioxid (IrO₂) aufweist.

5. Katalysatorbauteil (10) nach einem der vorstehenden Ansprüche, wobei die dünne Schicht des Katalysatormaterial (2) mittels wenigstens einem Precursor (51-55, 61, 62) gebildet wurde.

6. Katalysatorbauteil (10) nach einem der vorstehenden Ansprüche, wobei die dünne Schicht des Katalysatormaterials (2) mittels eines ALD-Verfahrens auf die Trägerstruktur (1) aufgebracht wurde.

7. Katalysatorbauteil (10) nach einem der vorstehenden Ansprüche, zusätzlich umfassend ein Metalloxid (11), insbesondere ATO, Titandioxid, Nickeloxid oder Cobaltoxid, wobei das Metalloxid (11) in einer weiteren dünnen Schicht zwischen der Oberfläche der Trägerstruktur (1) und der dünnen Schicht des Katalysatormaterials (2) vorliegt.

8. Katalysatorbauteil (10) nach Anspruch 7, wobei das Metalloxid (11) mittels eines ALD-Verfahrens auf die Trägerstruktur (1) aufgebracht wurde.

9. Katalysatorbauteil (10) nach einem der vorstehenden Ansprüche, ausgestaltet als austauschbares Kassettenbauteil.

10. Gasdiffusionselektrode (3) ausgestaltet in Form eines Katalysatorbauteils (10) nach einem der Ansprüche 7 bis 9, wobei die Trägerstruktur (1) semipermeabel ist.

11. Elektrochemisches System zur elektrochemischen Wasserspaltung umfassend eine Kathode (K), an welcher die Wasserstoffentwicklungsreaktion erfolgt und eine Anode (A), an welcher die Sauerstoffentwicklungsreaktion erfolgt und wenigstens ein Katalysatorbauteil (10) nach einem der Ansprüche 1 bis 10.

12. Elektrochemisches System nach Anspruch 11, wobei die Gasdiffusionselektrode (3) Flüssigphase und entstehende Gasphase (O2, H2) trennt und das umfasste Katalysatormaterial (2) die Kinetik der zu betreibenden elektrochemischen Umsetzung steigert.
